# EUROPÄISCHE PATENTSCHRIFT

(11) **EP 3 001 044 B1**
(45) Veröffentlichungstag und Bekanntmachung des Hinweises auf die Patenterteilung: **07.06.2017**
(21) Anmeldenummer: 14186647.5
(22) Anmeldetag: 26.09.2014
(51) Int. Cl.: F16B 2/08, F16L 33/02

(54) **SCHRUMPFRING**
SHRINK RING
ANNEAU DE SERTISSAGE

(43) Veröffentlichungstag der Anmeldung: 30.03.2016
(73) Patentinhaber: Oetiker Schweiz AG, 8810 Horgen (CH)
(72) Erfinder: Widrig, Markus, 8717 Benken SG (CH); Müller, Manuel, 5626 Staffeln (CH)
(74) Vertreter: Strehl Schübel-Hopf & Partner

(56) Entgegenhaltungen:
- EP-A1- 0 802 333
- WO-A1-99/39123
- WO-A1-2004/113738
- ES-A1- 2 156 576

## Beschreibung

### Stand der Technik

Aus WO 99/39123, WO 2004/113738 A1 und ES 2 156 576 sind Schrumpfringe bekannt, die aus einem offenen Klemmband mit zum Schließen des Schrumpfrings puzzle-artig ineinander greifenden Enden bestehen. Das eine Bandende trägt eine in Bandlängsrichtung vorspringende Zunge mit quer zur Bandlängsrichtung weisenden Armen und das andere Bandende ist komplementär dazu gestaltet. Die quer zur Bandlängsrichtung verlaufenden, dem freien Ende der Zunge zugewandten Querkanten der Zunge verlaufen bei den bekannten Schrumpfringen senkrecht oder auch schräg zur Bandlängsrichtung.

Derartige Schrumpfringe dienen zum Befestigen von rohrförmigen Formteilen, etwa Schläuchen, auf dem Umfang von zylindrischen Gegenständen, etwa Rohren, und eignen sich insbesondere zum Einsatz bei beschränkten Platzverhältnissen, wo übliche Klemmringe mit herausragenden ohrartigen Spannelementen nicht verwendbar sind.

Geschlossene Schrumpfringe, die aus Abschnitten von Rohrmaterial hergestellt werden, sind wegen der erforderlichen Bearbeitung der Rohrabschnitte sowie aufgrund der Tatsache nachteilig, dass für jeden Ringdurchmesser entsprechend dimensioniertes Rohrmaterial verwendet werden muss.

Bei Schrumpfringen aus offenem Klemmband besteht eine Schwierigkeit in der Festigkeit der Verbindung zwischen den Endkanten des Bandes insbesondere gegenüber Expansionskräften, die beim Einsatz des Schrumpfrings auftreten und diesen zu öffnen versuchen.

### Abriss der Erfindung

Der Erfindung liegt die generelle Aufgabe zugrunde, Nachteile, wie sie bei vergleichbaren Schrumpfringen nach dem Stand der Technik bestehen, mindestens teilweise zu beseitigen. Eine speziellere Aufgabe der Erfindung kann darin gesehen werden, einen Schrumpfring mit höherer Festigkeit in der gegenseitigen Verbindung der Bandendkanten zu schaffen.

Die Lösung dieser Aufgabe gelingt mit der in Anspruch 1 angegebenen Erfindung.

Messungen haben gezeigt, dass die Widerstandkraft gegenüber Expansionskräften bei einem erfindungsgemäßen Schrumpfring um bis zu 25% höher ist als bei einem herkömmlichen Schrumpfring, bei welchem grosse Teile der verfügbaren Breite zugunsten einer guten Schrumpfbarkeit aufgewendet werden müssen.

Offenbar werden die beim Schrumpfen und gegebenenfalls beim Stauchen an den ineinandergreifenden Kanten der Bandenden auftretenden geometrischen Verformungen durch die erfindungsgemäße Gestaltung der genannten Querkanten reduziert.

Daraus resultiert, dass der erfindungsgemäße Schrumpfring bei gleicher Dimensionierung höher belastbar ist und bei größeren Durchmessern eingesetzt werden kann.

Vorzugsweise haben die Ausbuchtung und die Einbuchtung im Wesentlichen teilkreisförmige Kanten, wobei die Höhe der Ausbuchtung und die Tiefe der Einbuchtung gegenüber dem mittleren Teil der Querkante jeweils 0,5 bis 0,8 % der Gesamtlänge des Verschlusses beträgt. Zu große Abweichungen schwächen die Arme, zu kleine ergeben eine zu geringe Verankerungswirkung.

Vorteilhafterweise bildet die vom freien Ende der Zunge abgewandte Querkante des Arms einen zum Zungenende hin weisenden Einsprung, der die Verankerungskraft weiter erhöht.

Um Querkräfte zu vermeiden, ist die Zunge symmetrisch zur Bandlängsachse geformt und trägt auf beiden Seiten jeweils drei Arme, die zum freien Zungenende hin in ihrer Ausdehung abnehmen. Dabei beträgt der in Bandlängsrichtung gemessene Abstand zwischen den mit Aus- und Einbuchtungen versehenen Querkanten aufeinander folgender Arme vorzugsweise im Wesentlichen 1/6 der Gesamtlänge des Verschlusses. Mit dieser Gestaltung wird ein im Rahmen der Herstellbarkeit optimaler Eingriff zwischen den Bandenden erreicht.

Eine weitere Steigerung der Verankerung lässt sich dadurch erzielen, dass die beiden Bandenden miteinander verstaucht werden.

### Kurzbeschreibung der Zeichnungen

Ein Ausführungsbeispiel der Erfindung wird nachstehend anhand der Zeichnung näher erläutert. Darin zeigen:
Fig. 1 einen Schrumpfring,
Fig. 2 die ineinander greifenden Bandenden des Schrumpfrings nach Fig. 1 in größerem Maßstab und
Fig. 3 einen Teil der Anordnung nach Fig. 2 in nochmals vergrößerter Darstellung.

### Ausführungsbeispiele

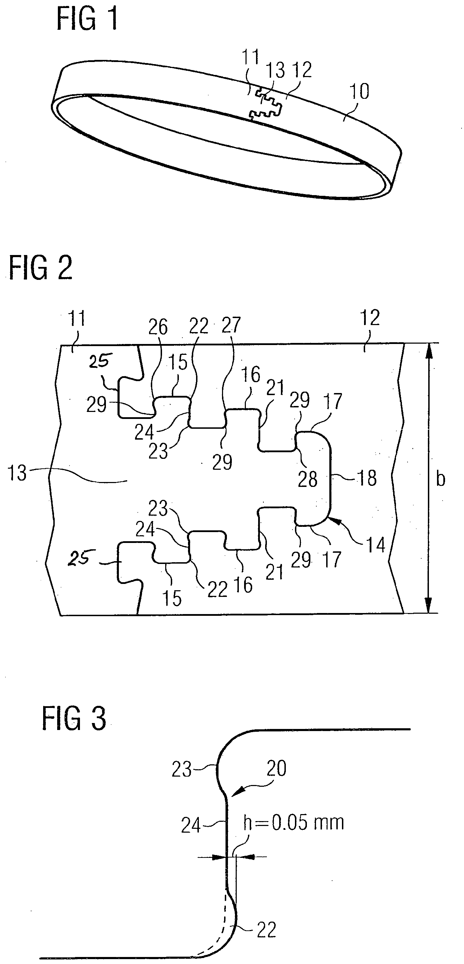

Der in Fig. 1 gezeigte Schrumpfring besteht aus einem zunächst offenen metallischen Klemmband **10,** dessen Enden **11, 12** so geformt sind, dass sie puzzle-artig ineinander greifen. Dazu sind an dem in Fig. 1 linken Bandende **11** eine Zunge **13** und im rechten Bandende **12** eine zur Kontur der Zunge **13** komplementär geformte Ausnehmung **14** ausgebildet,

Gemäß Fig. 2 ist die Zunge **13** zur Längsachse des Bandes **10** symmetrisch und trägt auf beiden Seiten je drei quer zur Bandlängsrichtung weisende Arme **15, 16, 17,** deren Ausdehungen zum freien Zungenende **18** hin abnehmen.

Die quer zur Bandlängsrichtung verlaufenden, dem Zungenende **18** zugewandten Querkanten **20, 21** der Arme **15, 16** weisen an ihrem freien äußeren Ende jeweils eine Ausbuchtung **22** und an ihrem mit dem Hauptteil der Zunge **13** verbundenen inneren Ende eine Einbuchtung **23** auf.

Wie insbesondere aus Fig. 3 ersichtlich, haben die Ausbuchtung **22** und die Einbuchtung **23** jeweils teilkreisförmige Kanten und weichen vom geraden Mittelteil **24** der Querkante **20, 21** um ein Maß *h* ab, typischerweise 0.5-0.8% der Gesamtlänge des Verschlusses, d.h. der Länge der Zunge **13.** Bei einer typischen Klemmbandbreite *b* von **10** mm beträgt das Maß *h* ca. 0,05 mm. Die weitere Querkante **25** kann, abweichend von dem gezeigten Ausführungsbeispiel, in gleicher Weise gemäß Fig. 3 geformt sein.

Die in Bandlängsrichtung gemessenen Abstände zwischen den Querkanten **20, 21** und **25** sind gleich und betragen etwa 1/6 der Gesamtlänge des Verschlusses. Die vom Zungenende **18** abgewandten Querkanten **26, 27, 28** der drei Arme **15, 16, 17** sind jeweils mit einem zum Zungenende **18** hin verlaufenden Einsprung **29** versehen, der eine Hinterschneidung zur weiteren formschlüssigen Verankerung zwischen den beiden Bandenden **11, 12** bildet.

Beim anschließenden Schrumpfen werden die Bandenden **11, 12** gegeneinander gedrückt und gestaucht. Durch das Schrumpfen wird der Ring in seinem Durchmesser reduziert, wodurch das Abbindegut komprimiert wird. Nach dem Schrumpfen versucht das Abbindegut sich auszudehnen, wodurch der Schrumpfring und die Verbindung zwischen seinen Bandenden **11, 12** auf Zug belastet werden. Dabei stellt der von dem Einsprung **29** gebildete Haken eine Sicherung gegen seitliches Ausbrechen dar.

### Bezugszeichen

- **10**: Klemmband
- **11, 12**: Bandenden
- **13**: Zunge
- **14**: Ausnehmung
- **15...17**: Arme
- **18**: Zungenende
- **20,21**: Querkanten
- **22**: Ausbuchtung
- **23**: Einbuchtung
- **24**: Mittelteil von 20, 21
- **25**: Querkante
- **26...28**: Querkanten
- **29**: Einsprung

## Patentansprüche

1. Schrumpfring aus einem Klemmband **(10),** dessen Enden **(11, 12)** zum Schließen des Schrumpfrings puzzle-artig ineinander greifen, wobei das eine Bandende **(11)** eine in Bandlängsrichtung vorspringende Zunge **(13)** mit quer zur Bandlängsrichtung weisenden Armen **(15... 17)** trägt und das andere Bandende **(12)** komplementär dazu gestaltet ist,
**dadurch gekennzeichnet, dass** die quer zur Bandlängsrichtung verlaufende, dem freien Ende **(18)** der Zunge **(13)** zugewandte Querkante **(20, 21)** mindestens eines Arms **(15, 16)** mit einem geraden Mittelteil **(24),** einer an ihrem äußeren Ende von dem geraden Mittelteil **(24)** abweichende Ausbuchtung **(22)** und einer an ihrem inneren Ende von dem geraden Mittelteil **(24)** abweichende Einbuchtung **(23)** versehen ist.

2. Schrumpfring nach Anspruch 1, wobei die Ausbuchtung **(22)** und die Einbuchtung **(23)** im Wesentlichen teilkreisförmige Kanten aufweisen.

3. Schrumpfring nach Anspruch 1 oder 2, wobei die Höhe (*h*) der Ausbuchtung **(22)** und die Tiefe (*h*) der Einbuchtung **(23)** gegenüber dem mittleren Teil **(24)** der Querkante **(20, 21)** jeweils 0.5-0.8% der Gesamtlänge des Verschlusses beträgt.

4. Schrumpfring nach einem der vorhergehenden Ansprüche, wobei die vom freien Ende **(18)** der Zunge **(13)** abgewandte Querkante **(26...28)** des Arms **(15...17)** einen zum Zungenende **(18)** hin weisenden Einsprung **(29)** bildet.

5. Schrumpfring nach einem der vorhergehenden Ansprüche, wobei die Zunge **(13)** symmetrisch zur Bandlängsachse geformt ist.

6. Schrumpfring nach einem der vorhergehenden Ansprüche, wobei die Zunge **(13)** auf beiden Seiten jeweils drei Arme **(15...17)** trägt.

7. Schrumpfring nach einem der vorhergehenden Ansprüche, wobei die Arme **(15...17)** zum freien Zungenende **(18)** hin in ihrer Ausdehnung abnehmen.

8. Schrumpfring nach einem der vorhergehenden Ansprüche, wobei der in Bandlängsrichtung gemessene Abstand zwischen den mit Aus- und Einbuchtungen versehenen Querkanten **(20, 21)** aufeinander folgender Arme **(15, 16)** im Wesentlichen 1/6 der Gesamtlänge des Verschlusses beträgt.

9. Schrumpfring nach einem der vorhergehenden Ansprüche, wobei die beiden Bandenden **(11, 12)** miteinander verstaucht sind.

## Claims

1. A shrink ring formed of a clamping band **(10)** the ends **(11, 12)** of which engage one another in puzzle-like fashion for closing the shrink ring, wherein one band end **(11)** carries a tongue **(13)** projecting in the longitudinal direction of the band and having arms **(15... 17)** extending transversely to the longitudinal direction of the band, and the other band end **(12)** is formed complementarily thereto,
**characterised in that**, on at least one arm **(15, 16),** the transverse edge **(20, 21)** which extends transversely to the longitudinal direction of the band and faces the free end **(18)** of the tongue **(13)** has a straight middle part **(24),** a convex part **(22)** deviating form the straight central part **(24)** at its outer end, and a concave part **(23)** deviating form the straight middle part **(24)** at its inner end.

2. The shrink ring of claim1, wherein the convex part **(22)** and the concave part **(23)** have essentially part-circular edges.

3. The shrink ring of claim1 or 2, wherein the height (h) of the convex part **(22)** and the depth (h) of the concave part **(23)** as measured from the central part **(24)** of the transverse edge **(20, 21)** each amounts to 0.5 to 0.8 per cent of overall length of the closure.

4. The shrink ring of any preceding claim, wherein the transverse edge **(26...28)** of the arm **(15...17),** which faces away from the free end **(18)** of the tongue **(13),** forms a recess **(28)** extending toward the end **(18)** of the tongue.

5. The shrink ring of any preceding claim, wherein the tongue **(13)** is symmetrical with respect to the longitudinal band axis.

6. The shrink ring of any preceding claim, wherein the tongue **(13)** has three arms **(15... 17)** on either side.

7. The shrink ring of any preceding claim, wherein the arms (**15**...**17**) have lengths which decrease toward the free end **(18)** of the tongue.

8. The shrink ring of any preceding claim, wherein the space, measured in the longitudinal direction of the band, between the transverse edges **(20, 21)** having the convex and concave parts of adjacent arms **(15, 16)** amounts to substantially 1/6 of the overall length of the closure.

9. The shrink ring of any preceding claim, wherein the two band ends **(11, 12)** are swaged with one another.

## Revendications

1. Anneau de sertissage constitué d'une bande de serrage (10) dont les extrémités (11, 12) s'engagent l'une dans l'autre de manière analogue à un puzzle pour fermer l'anneau de sertissage, dans lequel la première extrémité de bande (11) porte une languette (13) faisant saillie dans une direction longitudinale de bande avec des bras (15 à 17) pointant transversalement à la direction longitudinale de bande, et l'autre extrémité de bande est formée de manière complémentaire à celle-ci,
**caractérisé en ce que** le bord transversal (20, 21) d'au moins un bras (15, 16) s'étendant transversalement à la direction longitudinale de bande et dirigé vers l'extrémité libre (18) de la languette (13) est muni d'une partie centrale droite (24), d'un renflement (22) s'écartant de la partie centrale droite (24) à son extrémité extérieure et d'un creux (23) s'écartant de la partie centrale droite (24) à son extrémité intérieure.

2. Anneau de sertissage selon la revendication 1, dans lequel le renflement (22) et le creux (23) ont des bords sensiblement en forme de portions de cercle.

3. Anneau de sertissage selon la revendication 1 ou 2, dans lequel la hauteur (h) du renflement (22) et la profondeur (h) du creux (23) par rapport à la partie centrale (24) du bord transversal (20, 21) représentent respectivement 0,5 à 0,8 % de la longueur totale de la fermeture.

4. Anneau de sertissage selon l'une des revendications précédentes, dans lequel le bord transversal (26 à 28) du bras (15 à 17) opposé à l'extrémité libre (18) de la languette (13) forme un élément d'encliquetage (29) dirigé vers l'extrémité de languette (18).

5. Anneau de sertissage selon l'une des revendications précédentes, dans lequel la languette (13) est formée symétriquement à l'axe longitudinal de bande.

6. Anneau de sertissage selon l'une des revendications précédentes, dans lequel la languette (13) supporte respectivement trois bras (15 à 17) des deux côtés.

7. Anneau de sertissage selon l'une des revendications précédentes, dans lequel l'étendue des bras (15 à 17) diminue jusqu'aux extrémités libres (18) de la languette.

8. Anneau de sertissage selon l'une des revendications précédentes, dans lequel la distance mesurée dans la direction longitudinale de bande entre les bords transversaux (20, 21) munis de renflements et de creux de bras (15, 16) successifs représentent pratiquement 1/6 de la longueur totale de la fermeture.

9. Anneau de sertissage selon l'une des revendications précédentes, dans lequel les deux extrémités de bande (11, 12) sont comprimées l'une dans l'autre.
